(19) **Europäisches Patentamt**
**European Patent Office**
**Office européen des brevets**

(11) **EP 0 947 557 B1**

(12) **EUROPÄISCHE PATENTSCHRIFT**

(45) Veröffentlichungstag und Bekanntmachung des Hinweises auf die Patenterteilung:
**05.12.2007  Patentblatt 2007/49**

(51) Int Cl.:
*C08L 33/04* (2006.01)    *C09D 133/04* (2006.01)
*C08F 265/06* (2006.01)    *C08F 285/00* (2006.01)
*C08F 263/04* (2006.01)    *C08G 18/63* (2006.01)

(21) Anmeldenummer: **99105420.6**

(22) Anmeldetag: **17.03.1999**

(54) **Copolymerisatdispersionen, Bindemittelcombinationen auf Basis der Copolymerisatdispersionen, ein Verfahren zu deren Herstellung und deren Verwendung**

Copolymer dispersions, binder combinations based on copolymer dispersions, process for preparing the same and using the same

Dispersions de copolymères, combinaisons de liant à base de dispersions de copolymères, procédé de leur fabrication et leur utilisation

(84) Benannte Vertragsstaaten:
**AT BE CH DE ES FR GB IT LI NL SE**

(30) Priorität: **30.03.1998  DE 19814061**

(43) Veröffentlichungstag der Anmeldung:
**06.10.1999  Patentblatt 1999/40**

(73) Patentinhaber: **Bayer MaterialScience AG**
**51368 Leverkusen (DE)**

(72) Erfinder:
• **Blum, Harald Dr.**
**51375 Leverkusen (DE)**
• **Hovestadt, Wieland Dr.**
**50374 Erftstadt (DE)**
• **Noble, Karl Ludwig Dr.**
**51467 Bergisch Gladbach (DE)**

(56) Entgegenhaltungen:
**US-A- 4 413 037        US-A- 4 801 653**
**US-A- 5 438 099**

**Beschreibung**

Die Erfindung betrifft wäßrige, durch Kombination mit Vernetzerharzen aushärtbare Copolymerisatdispersionen, ein Verfahren zu deren Herstellung und deren Verwendung.

Aus einer Vielzahl von Veröffentlichungen und Patenten ist bekannt, Dispersionen auf Basis von Copolymerisaten in wasserverdünnbaren Lacken und Beschichtungssystemen einzusetzen.

In den EP-A-225 612 und DE-A-3 543 361 werden beispielsweise physikalisch trocknende Polymerisatdispersionen beschrieben, die nach einem zweistufigen Polymerisationsverfahren hergestellt werden, wobei nur in einer der beiden Polymerisationsstufen Carboxylgruppen aufweisende Monomere eingesetzt werden.

Damit aus diesen Dispersionen hergestellte Beschichtungen einen gute Wasserfestigkeit aufweisen, wird Ammoniak als Neutralisationsmittel bei deren Herstellung eingesetzt. Zusätze anderer Neutralisationsmittel verschlechtern die Wasserfestigkeit der aus ihnen herstellbaren Überzüge und Filme. Hydroxylgruppen aufweisende Monomere werden nicht eingesetzt, da diese die Wasserfestigkeit ungünstig beeinflussen können.

In den EP-A-363 723, DE-A-4 009 858, DE-A-4 009 931, EP-A- 521 919, DE-A-4 009 932, EP-A- 365 775 werden z.B. Verfahren zur Herstellung mehrschichtiger Überzüge beschrieben, bei denen zunächst eine Basisschicht aufgebracht wird, aus welcher sich ein Polymerfilm bildet; dann wird eine Deckschicht aufgebracht und anschließend Basisschicht und Deckschicht gemeinsam eingebrannt. Für Basis- bzw. Deckschicht werden dabei nach einem zweistufigen Herstellverfahren erhaltene Copolymerisatdispersion, gegebenenfalls in Kombination mit Aminoplastharzen eingesetzt. Durch die Verwendung dieser speziellen Copolymerisatdispersion sind höhere Schichtstärken und gute filmoptische Eigenschaften möglich. Nachteilig bei all diesen Dispersionen ist jedoch der hohe Anteil an carboxylfunktionellen Monomeren im hydrophilen Copolymerisatteil.

In der JP-A-80/82 166 werden zweistufig hergestellte Polyacrylatdispersionen beschrieben. Bei deren Herstellung werden in beiden Stufen Carboxylgruppen enthaltende Ausgangsstoffe eingesetzt. Dies führt zu Dispersionen mit relativ niedrigen Festkörpergehalten. Daraus hergestellte Beschichtungen zeigen verminderte Wasserfestigkeit. Das gilt auch für die Offenbarung der US 4,413,037.

In der US-A-4 151 143 werden zweistufig hergestellte Polyacrylatdispersionen beschrieben, wobei die 1. Stufe in organischer Lösung hergestellt, anschließend dispergiert und in Gegenwart der 1. Stufe eine Emulsionspolymerisation als 2. Stufe durchgeführt wird. Die so hergestellten Produkte haben hohe Molekulargewichte, zeigen bei der Anwendung als Beschichtungsmittel ungünstige Verfilmung und haben insgesamt andere Eigenschaften als übliche Sekundärdispersionen.

In der EP-A-557 844 werden wäßrige 2-Komponenten-Polyuretban-Beschichtungen beschrieben auf Basis von praktisch carboxylatgruppenfreien Emulsionscopolymerisaten, die durch Zusatz von externen Emulgatoren stabilisiert sind, und hydrophilen Polyisocyanaten. Aufgrund der hohen Molgewichte der Polymeren und der bleibenden Hydrophilie der zugesetzten Emulgatoren weisen solche Beschichtungssysteme für einige Anwendungen noch Defizite in Wasserfestigkeit, Pigmentbenetzung und Filmoptik auf.

In der EP-A-358 975 werden wäßrige 2-Komponenten-Polyurethan-Reaktivsysteme beschrieben, die bereits ein gutes Eigenschaftsniveau aufweisen. Für manche Anwendungen sind jedoch Verbesserungen im Festkörpergehalt, in der Wasserfestigkeit und der Verarbeitungszeit bzw. Applikationssicherheit wünschenswert.

In der DE-A 4 439 669, DE-A 4 322 242 und JP-A 41 245 werden wäßrige 2-Komponenten-Polyurethan-Reaktivsysteme auf Basis zweistufig herstellbarer, spezielle Monomere enthaltender Copolymerisate beschrieben. Die speziellen Monomeren sollen zwar verbesserte Eigenschaften in daraus hergestellten Beschichtungen ergeben, führen aber dazu, daß die Produkte erheblich teurer werden, so daß die wirtschaftliche Anwendungsmöglichkeiten eingeschränkt sind.

US 4,801,653 offenbart Beschichtungsmittel auf der Grundlage von Propfpolymeren, die durch Reaktion von carboxylgruppenhaltigen Polymere mit epoxhaltigen Polymeren erhalten werden.

US 5,438,099 betrifft ebenfalls Propfcopolymere. Diese enthalten als wesentlichen Bestandteil eine elastomere Komponente auf Basis von Dienpolymeren.

Aus der Vielzahl der Patentanmeldungen auf dem Gebiet der Polymerisatdispersionen läßt sich erkennen, daß weiterer Bedarf nach verbesserten Produkten besteht, um den steigenden Anforderungen an Lacke bzw. Beschichtungen gerecht zu werden. Insbesondere gefordert werden Dispersionen, die aufgrund reaktiver Gruppen in der Lage sind, bereits bei niedrigen Temperaturen - möglichst bei Raumtemperatur - mit geeigneten Vernetzern zu hochwertigen Beschichtungen auszuhärten.

Aus ökonomischer und anwendungstechnischer Sicht vorteilhaft sind Dispersionen mit hohem Festkörpergehalt, ausgezeichneter Lagerstabilität, und zwar sowohl als Dispersion als auch im Lack. Dafür ist z. B. eine sehr gute Pigmentierbarkeit notwendig, die auch für die geforderte ausgezeichnete Filmoptik von erheblichem Einfluß ist. Die Lackfilme müssen sehr gute Beständigkeitseigenschaften gegen Lösemittel, Wasser und Umwelteinflüsse aufweisen.

Um in möglichst vielen Anwendungsbereichen einsetzbar zu sein, ist eine gute Verträglichkeit der Dispersionen mit möglichst vielen handelsüblichen Vernetzern notwendig. Wesentlich ist auch ein einfaches (und damit wirtschaftliches) Herstellverfahren für die Dispersionen, ohne z.B. einen aufwendigen und zeitintensiven Destillationsschritt, ohne Verwendung weiterer, getrennt herzustellender Komponenten. Die Dispersion sollen Lösemittelgehalte <12 % aufweisen und auf Basis möglichst preisgünstiger, gut verfügbarer Rohstoffe die geforderten Eigenschaften ergeben.

Überraschenderweise wurde jetzt gefunden, daß spezielle, ausgewählte Copolymerisate in der Lage sind, die gestellten Anforderungen zu erfüllen.

Gegenstand der Erfindung sind durch Kombination mit Vernetzerharzen aushärtbare in Wasser dispergiert und/oder gelöst vorliegende Copolymerisate A) bestehend aus

I) einem hydrophoben Copolymerisat I), aus

Ia) (Meth)-acrylsäureestern mit $C_1$ bis $C_{18}$ Kohlenwasserstoffresten im Alkoholteil und/oder Vinylaromaren und/oder Vinylestern, und

Ib) hydroxyfunktionellen Monomeren,

II) einem hydrophil-hydrophoben Copolymerisat II), aus

IIa) (Meth)-acrylsäureestern mit $C_1$ bis $C_{18}$ Kohlenwasserstoffresten im Alkoholteil und/oder Vinylaromaten und/oder Vinylestern,

IIb) hydroxyfunktionellen Monomeren, und

IIc) säurefunktionellen Monomeren,

und gegebenenfalls

III) einem hydrophoben Copolymerisat III), aus

IIIa) hydroxy- und nichtfunktionelle (Meth)-acrylsäureestern bzw. Vinylaromaten,

wobei der Anteil am Copolymerisat A) für

Ia) 30 bis 80 Gew.-%,
Ib) 5 bis 45 Gew.-%,
IIa) 4 bis 20 Gew.-%,
IIb) 4 bis 15 Gew.-%.
IIc) 0,8 bis 3.0 Gew.-% und
IIIa) 0 bis 16 Gew.-%

beträgt und die Summe aus Ia), Ib), IIa), IIb), IIc) und gegebenenfalls IIIa) 100 Gew.-% beträgt, wobei die Säurezahl 10 bis 28 mg KOH/g Substanz, der Anteil der säurefunktionellen Monomeren IIc) an der in A) enthaltenen Menge von II) <25 Gew.-% und wobei der Anteil an hydroxyfunktionellen Monomeren IIb) in der Menge II) höher ist, als der Anteil an hydroxyfunktioneller Monomerer Ib) in I).

Bevorzugt sind durch Kombination mit Vernetzerharzen aushärtbare, in Wasser dispergiert und/oder gelöst vorliegende Copolymerisate A), dadurch gekennzeichnet, daß der Anteil der Monomeren IIa) an dem in A) enthaltenen Copolymerisat II) 25 bis 65 Gew.-%, der Anteil des Copolymerisats I) 60 bis 90 Gew.-%, der Anteil der Monomeren IIb) an dem in A) enthaltenen Copolymerisat II) 25 bis 65 Gew.-%, der Anteil des Copolymerisats II) 10 bis 40 Gew.-% und der Anteil des Copolymerisats III) 0 bis 16 Gew.-% an A) beträgt und wobei mindestens 70 % der Carboxylgruppen in Salzform vorliegen.

Besonders bevorzugt sind durch Kombination mit Vernetzerharzen aushärtbare, in Wasser dispergiert und/oder gelöst vorliegende Copolymerisate A), bestehend aus Copolymerisat I) aus

Ia) 40 bis 80 Gew.-% (Meth)-acrylsäureester mit $C_1$ bis $C_{18}$ aliphatischen Kohlenwasserstoffresten im Alkoholteil und/oder Vinylaromaten,

Ib) 7,5 bis 35 Gew.-% hydroxyfunktionelle (Meth)-acrylsäureester,

Copolymerisat II) aus

IIa) 4 bis 10 Gew.-% (Meth)-acrylsäureester mit $C_1$ bis $C_{18}$ aliphatischen Kohlenwasserstoffresten im Alkoholteil und/oder Vinylaromaten,

IIb) 6 bis 12 Gew.-% hydroxyfunktionelle (Meth)-acrylsäureester,

IIc) 1,5 bis <2,5 Gew.-% säurefunktionelle Monomere,

und Copolymerisat III) aus

IIIa) 0 bis 16 Gew.-% hydroxy- und nichtfunktionelle (Meth)-acrylsäureester bzw. Vinylaromaten,

wobei die carboxylfunktionellen Monomere in solchen Mengen eingesetzt werden, daß eine Säurezahl von >12 bis <25 mg KOH/g Substanz resultiert und wobei >90 % der Carboxylgruppen in Salzform vorliegen.

Eine weitere bevorzugte Ausführungsform sind die durch Kombination mit Vernetzerharzen aushärtbaren, in Wasser dispergiert und/oder gelöst vorliegenden Copolymerisate A), dadurch gekennzeichnet, daß der Anteil Copolymerisat I) >80 bis 90 Gew.-%, der Anteil Copolymerisat II) 10 bis <20 Gew.-% an A), sowie der Anteil carboxylfunktioneller Monomere IIc) an dem Copolymerisat II) 6 bis 18 Gew.-% beträgt und eine Säurezahl von 15 bis 20 mg KOH/g Substanz ergibt, wobei Neutralisationsmittel in solchen Mengen zugesetzt wird, daß nach Überführung aller Carboxylgruppen in die Salzform ein pH-Wert von 7,9 bis 10,0 resultiert und noch freies Neutralisationsmittel enthalten ist.

Eine weitere, ebenfalls bevorzugte Ausführungsform sind die durch Kombination mit Vernetzerharzen aushärtbaren, in Wasser dispergiert und/oder gelöst vorliegenden Copolymerisate A), dadurch gekennzeichnet, daß ein Lösemittelgemisch aus 30 bis 95 Gew.-% eines hydrophoben, nicht wassermischbaren, unverseifbaren Lösemittels i) und 5 bis 70 Gew.-% eines wassermischbaren bzw. wasserlöslichen, unverseifbaren Lösemittels ii) in der Dispersion in einer Menge von <12 Gew.-% enthalten ist.

Gegenstand der Erfindung sind auch Bindemittelkombinationen bestehend aus 50 bis 95 Gew.-% A) und 5 bis 50 Gew.-% mindestens eines Vernetzerharzes aus der Gruppe der Aminoplastharze und/oder der bockierten Polyisocyanate und/oder der Polyisocyanate mit freien Isocyanatgruppen.

Gegenstand der Erfindung ist auch ein Verfahren zur Herstellung der erfindungsgemäßen in Wasser dispergiert und/oder gelöst vorliegenden Copolymerisate A), dadurch gekennzeichnet, daß in 70 bis 95 %iger organischer Lösung eine radikalisch initiierte Copolymerisation von

| 30 bis 80 Gew.-% | Monomeren Ia) und |
| 5 bis 45 Gew.-% | Monomeren Ib), |

in einer Menge von 60 bis 90 Gew.-% zu einem hydrophoben, hydroxyfunktionellen, praktisch carboxylgruppenfreien Copolymerisat I) und im Anschluß daran eine weitere radikalisch initiierte Copolymerisation von

| 4 | bis 20 Gew.-% | Monomeren IIa), |
| 4 | bis 15 Gew.-% | Monomeren IIb) und |
| 0,8 | bis 3 Gew.-% | Monomeren IIc), |

in einer Menge von 10 bis 40 Gew.-% zu einem hydrophil-hydrophoben, hydroxy- und carboxyfunktionellen Copolymerisat II) und gegebenenfalls im Anschluß daran eine weitere radikalisch initiierte Copolymerisation von

| 0 bis 16 Gew.-% | Monomeren IIIa), |

in einer Menge von <16 Gew.-% zu einem hydroxyfunktionellen, hydrophoben Copolymerisat III) durchgeführt wird, in Anschluß daran für 70 bis 130 % der Carboxylgruppen ein Neutralisationsmittel zugesetzt und das so erhaltene Bindemittel in Wasser dispergiert wird.

Gegenstand der Erfindung ist auch die Verwendung dieser Bindemittel in Kombination mit Vernetzerharzen für chemisch vernetzbare Lacke und Beschichtungen.

Überraschend war, daß auch ohne die in der EP-A-758 007 beschriebenen und eingesetzten hydroxyfunktionellen Polyether die gestellten Anforderungen erfüllt werden können. Der Entfall dieser Polyether vereinfacht die Fertigung der erfindungsgemäßen Dispersion erheblich. Dies ist umso überraschender, da die Copolymerisate A) vorzugsweise in einer speziellen Lösemittelmischung aus 30 bis 95, besonders bevorzugt 50 bis 85 Gew.-% eines hydrophoben, nicht wassermischbaren, unverseifbaren Lösemittels i), wie z.B. Xylol, Toluol, Solvent Naphta, technische Kohlenwasserstoffgemische wie z.B. ®Isopar, ®Terapin, Kristallöl, Testbenzin, bzw. Mischungen dieser und anderer hydrophober Lösemittel sowie ii) 5 bis 70, besonders bevorzugt 15 bis 50 Gew.-% wassermischbarer bzw. wasserlöslicher, unverseifbarer Lösemittel wie z.B. Butylglykol, Methoxypropanol Butyldiglykol, Diethylenglykol, Dipropylenglykol, Ethylglykol, Propylglykol, Methyldiglykol bzw. Mischungen dieser und anderer wassermischbarer bzw. wasserlöslicher unverseifbarer Lösemittel hergestellt werden. Die Herstellung erfolgt dabei vorzugsweise unter Ausschluß von Wasser, nur in organischen Lösemitteln.

Dies war nicht zu erwarten, da z.B. in der DE-A-3 022 824, in der wasserverdünnbare Copolymerisate beschrieben werden, festgestellt wird, daß nicht wassermischbare Lösemittel die Wasserverdünnbarkeit der Bindemittel beeinträchtigen, so daß ein Zusatz solcher Lösemittel wenig empfehlenswert sei. Dieses Vorurteil wird auch dadurch untermauert, daß im oben zitierten Stand der Technik die beschriebenen Lösemittel i) in keinem Ausführungsbeispiel eingesetzt werden.

Die in Wasser dispergiert und/oder gelöst vorliegenden Copolymerisate A) werden durch Copolymerisation zunächst der Monomere Ia) und Ib) zu einem Copolymerisat I) hergestellt, wobei der Anteil des Copolymerisats I) an der Copolymerisatdispersion A) 60 bis 90, vorzugsweise >80 bis 90 Gew.-%, der Anteil des Copolymerisats II) an der Copolymerisatdispersion A) 10 bis 40, vorzugsweise 10 bis <20 Gew.-%, beträgt.

Carboxylfunktionelle Monomere werden bei der Herstellung des Copolymerisats I) nicht eingesetzt. Erfindungswesentlich für das Erreichen der gestellten Anforderung ist, daß zunächst ein hydrophobes Copolymerisat I), anschließend in situ ein hydrophil-hydrophobes Copolymerisat II) und gegebenenfalls anschließend in situ ein hydrophobes Copolymerisat III) hergestellt wird. Andere Vorgehensweisen, wie z.B. zuerst ein hydrophiles, dann ein hydrophobes Copolymerisat herzustellen, bzw. ein Verfahren, bei dem alternierend Teilmengen von I) und II) polymerisiert, oder ein Verfahren bei dem die Mengen I) und II) gleichzeitig zugegeben werden, führt zu qualitativ schlechteren Dispersionen.

Geeignete Monomere Ia) sind z.B. Ethylacrylat, n-Butylacrylat, iso-Butylacrylat, 2-Ethylhexylacrylat, Methylmethacrylat, Styrol, Vinyltoluol, Ethylmethacrylat, Butylmethacrylat, 2-Ethylhexyl-methacrylat, $\alpha$-Methylstyrol bzw. Mischungen dieser und anderer Monomere. Bevorzugte (Meth)-acrylsäureester Ia) sind solche mit linear- oder verzweigt-aliphatischen Kohlenwasserstoffresten mit 1 bis 18, besonders bevorzugt 1 bis 8 C-Atomen. Gegebenenfalls können Vinylester mitverwendet werden. Der Anteil der Monomeren Ia) am in Wasser dispergiert und/oder gelöst vorliegenden Copolymerisat A) beträgt 30 bis 80, vorzugsweise 40 bis 80 Gew.-%, bevorzugte Monomere Ia) sind Styrol, Methylmethacrylat, Butylmethacrylat, Butylacrylat und 2-Ethylhexylacrylat bzw. Mischungen dieser Monomeren.

Geeignete hydroxyfunktionelle Monomere Ib) sind z.B. Hydroxyethylmethacrylat, Hydroxypropylmethacrylat, Hydroxyethylacrylat, Hydroxypropylacrylat, Hydroxybutylacrylat, Hydroxybutylmethacrylat. Der Anteil der Monomere Ib) am in Wasser dispergiert und/oder gelöst vorliegenden Copolymerisat A) beträgt 5 bis 45, vorzugsweise 7,5 bis 35 Gew.-%, bevorzugte Monomere Ib) sind Hydroxyethylmethacrylat, Hydroxypropylmethacrylat, Hydroxyethylacrylat, Hydroxypropylacrylat.

Die Herstellung des Copolymerisats I) erfolgt durch eine radikalisch initiierte Copolymerisation der Monomermischung Ia) und Ib) in organischer Lösung, vorzugsweise in einer Lösemittelmischung aus 30 bis 95, besonders bevorzugt 50 bis 85 Gew.-% eines hydrophoben, nicht wassermischbaren, unverseifbaren Lösemittels i) und 5 bis 70, vorzugsweise 15 bis 50 Gew.-% eines wassermischbaren bzw. wasserlöslichen, unverseifbaren Lösemittel ii) der oben beispielhaft beschriebenen Art.

Als Initiatoren geeignet sind organische Peroxide wie z.B. Di-tert. Butylperoxid oder tert. Butylperoxy-2-ethylhexanoat und Azoverbindungen in Mengen von 0,5 bis 6,5, vorzugsweise 2,0 bis 4,5 Gew.-%. Die Copolymerisation wird im allgemeinen bei 90 bis 180°C nach einem Monomerzudosierverfahren durchgeführt.

Im Anschluß an die Copolymerisation der Monomeren Ia) und Ib) zum Copolymerisat I) wird die Copolymerisation der Monomeren IIa), IIb) und IIc) zum Copolymerisat II) in Gegenwart des Copolymerisats I) durchgeführt.

Der Anteil des Copolymerisats II) am in Wasser dispergiert und/oder gelöst vorliegenden Copolymerisat A) beträgt 10 bis 40, vorzugsweise 10 bis <20 Gew.-%.

Geeignete hydrophobe Monomere IIa) sind die unter Ia) beschriebenen Monomeren, bevorzugte Monomere IIa) sind Methylmethacrylat, Butylacrylat, Styrol, Butylmethacrylat, 2-Ethylhexylacrylat und Mischungen dieser Monomeren.

Der Anteil der Monomeren IIa) am in Wasser dispergiert und/oder gelöst vorliegenden Copolymerisat A) beträgt 4 bis 20, vorzugsweise 4 bis 10 Gew.-%. Der Anteil der hydrophoben Monomere IIa) an der in der Copolymerisatdispersion A) enthaltenen Menge des Copolymerisats II) beträgt 25 bis 65, vorzugsweise 30 bis 60 Gew.-%.

Geeignete Monomere IIb) sind die bereits unter Ib) beschriebenen, bzw. bevorzugt genannten hydroxyfunktionellen Monomeren.

Der Anteil der Monomeren IIb) am in Wasser dispergiert und oder gelöst vorliegenden Copolymerisat A) beträgt 4 bis 15, vorzugsweise 6 bis 12 Gew.-%, wobei der prozentuale Anteil der hydroxyfunktionellen Monomeren IIb) am Copolymerisat II) höher sein muß, als der prozentuale Anteil der hydroxyfunktionellen Monomeren Ib) am Copolymerisat I) und wobei der Anteil der hydroxyfunktionellen Monomeren IIb) an der in der Copolymerisatdispersion A) enthaltenen Menge des Copolymerisats II) 25 bis 65, vorzugsweise 35 bis 55 Gew.-% beträgt. Vorzugsweise ist der prozentuale Anteil der hydroxyfunktionellen Monomeren IIb) am Copolymerisat II) um mindestens 25 %, ganz besonders bevorzugt um mindestens 50 % höher, als der prozentuale Anteil der hydroxyfunktionellen Monomeren Ib) am Copolymerisat I).

Überraschenderweise wurde gefunden, daß dieser erhöhte Anteil an Vernetzungsstellen im Copolymerisatteil II) auch bei insgesamt niedrigem Gehalt an Hydroxylgruppen zu besonders vorteilhaften Eigenschaften der Beschichtungen z.B. im Bezug auf Lösemittel- und Wasserfestigkeit führt, was die Wirtschaftlichkeit günstig beeinflußt.

Geeignete Monomere IIc) sind z.B. Acrylsäure, Methacrylsäure, Maleinsäure(anhydrid) und andere carboxylfunktionelle copolymerisierbare Monomere. Bevorzugt sind dabei Acrylsäure oder Methacrylsäure. Der Anteil der Monomere IIc) am in Wasser dispergiert und/oder gelöst vorliegenden Copolymerisat A) beträgt 0,8 bis 3,0, vorzugsweise 1,5 bis <2,5 Gew.-%. Der Anteil der Monomeren IIc) an der in dem in Wasser dispergiert und/oder gelöst vorliegenden Copolymerisat A) enthaltenen Menge des Copolymerisats II) beträgt <25, vorzugsweise 6 bis 18 Gew.-%, so daß Copolymerisat II) einen ausgewogenen hydrophil-hydrophoben Charakter aufweist.

Diese ausgewählte Mischung aus hydrophoben, aus hydroxyfunktionellen und aus hydrophilen, carboxyfunktionellen Monomere im Copolymerisat II) führt unter Verwendung eines Lösemittelgemisches aus mindestens einem hydrophilen, verseifungsstabilen Lösemittels und mindestens einem hydrophoben, nicht wassermischbaren, verseifungsstabilen Lösemittels und unter Verwendung eines Neutralisationsgrades von mindestens 70, vorzugsweise >90 % zu einem ausgezeichneten Eigenschaftsniveau der Beschichtungen.

Die hydroxylfunktionellen Monomere werden in solchen Mengen eingesetzt, daß eine theoretisch über die unten aufgeführte Gleichung berechenbare Hydroxylzahl (OHZ) des 100 %igen Copolymerisats A) von >25 bis <250, vorzugsweise >50 bis <175 mg KOH/g Substanz resultiert:

$$OHZ = \frac{\text{Menge Hydroxylmonomer in 1000 g A)} \cdot 56,1}{\text{Molgewicht Hydroxylmonomer}}$$

Die carboxylfunktionellen Monomere werden in solchen Mengen eingesetzt, daß eine theoretisch über die unten aufgeführte Gleichung berechenbare Säurezahl (SZ) des 100 %igen Copolymerisat A) von >8 bis <33, vorzugsweise >12 bis <25, besonders bevorzugt von > 15 bis <20 mg KOH/g Substanz resultiert:

$$SZ = \frac{\text{Menge Carboxylmonomer in 1000 g A)} \cdot 56,1}{\text{Molgewicht Carboxylmonomer}}$$

Gegebenenfalls wird im Anschluß an die Herstellung des Copolymerisats II) in situ die Copolymerisation von Monomeren IIIa) zum Copolymerisat III) in Gegenwart der Copolymerisate II) und I) durchgeführt.

Der Anteil des Copolymerisats III) an dem in Wasser dispergiert und/oder gelöst vorliegendem Copolymerisat A) beträgt <16 Gew.-%, vorzugsweise 1 bis 13 Gew.-%.

Geeignete hydrophobe Monomere IIIa) sind die unter Ia) und Ib) beschriebenen Monomeren, wobei vorzugsweise eine Mischung aus nichtfunktionellen und hydroxyfunktionellen Monomeren eingesetzt wird.

Zur Neutralisation der im Copolymerisat II) einpolymerisierten Carboxylgruppen können organische Amine oder wasserlöslich, anorganische Basen eingesetzt werden. Bevorzugt sind N-Methylmorpholin, Triethylamin, Dimethylethanolamin, Dimethylisopropanolamin, Methyldiethanolamin. Ebenfalls geeignet sind Diethylethanolamin, Butanolamin, Morpholin, 2-Aminomethyl-2-methyl-propanol, Isophorondiamin. Weniger gut geeignet, jedoch mitverwendbar ist Ammoniak.

Das Neutralisationsmittel wird in solchen Mengen zugesetzt, daß 70 bis 130 %, vorzugsweise mehr als 90 % der Carboxylgruppen in Salzform vorliegen, wobei ganz besonders bevorzugt eine solche Menge Neutralisationsmittel zugesetzt wird, daß nach Überführung aller Carboxylgruppen in die Salzform noch freies Neutralisationsmittel vorhanden ist. Dies entspricht einem Neutralisationsgrad von >100 %. Es wurde gefunden, daß dadurch Dispersionsstabilität, Lackstabilität, Pigmentbenetzung und die filmoptischen Eigenschaften deutlich verbessert werden können.

Der pH-Wert der wäßrigen Dispersion beträgt 6,0 bis 11,0, vorzugsweise 7,9 bis 10,0, der Festkörpergehalt beträgt >35, vorzugsweise ≥40 %.

Organische Lösemittel werden in solchen Mengen eingesetzt, das ihr Gehalt in der fertigen Dispersion <12, vorzugsweise <9% beträgt. Falls erforderlich können die eingesetzten Lösemittel auch durch eine Destillation wieder teilweise entfernt werden, wenn besonders niedrige Gehalte an organischen Lösemitteln gefordert werden.

Die erfindungsgemäßen, in Wasser dispergiert und/oder gelöst vorliegenden Copolymerisate A) werden gegebenenfalls zusammen mit anderen Bindemitteln oder Dispersionen, z.B. auf Basis von Polyestern, Polyurethanen, Polyethern, Polyepoxiden oder Polyacrylaten in Kombination mit Vernetzerharzen und gegebenenfalls Pigmenten und sonstigen in der Lackindustrie bekannten Hilfs- und Zusatzstoffen in oder als Lack bzw. Beschichtungsmittel eingesetzt.

50 bis 95, vorzugsweise 65 bis 90 Gew.-% Copolymerisate A), gegebenenfalls in Abmischung mit anderen Bindemitteln oder Dispersionen werden dabei mit 5 bis 50, vorzugsweise 10 bis 35 Gew.-% Vernetzerharz bzw. Mischungen verschiedener Vernetzerharze kombiniert.

Als Vernetzerharze eignen sich beispielsweise Amid- und Amin-Formaldehydharze, Phenolharze, Aldehyd- und Ketonharze, wie z. B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx Carl Hanser Verlag München, 1971, beschrieben sind.

Gut geeignet als Vernetzerharze sind auch blockierte Polyisocyanate, beispielsweise auf Basis von Isophorondiisocyanat, Hexamethylendiisocyanat, 1,4-Diisocyanatocyclohexan, Bis-(4-isocyanatocyclohexan)-methan oder 1,3-Diisocyanatobenzol oder auf Basis von Lackpolyisocyanaten wie Biuret- oder Isocyanuratgruppen aufweisende Polyisocyanate von 1,6-Diisocyanatohexan, Isophorondiisocyanat oder Bis-(4-isocyanatocyclohexan)-methan, oder Urethangruppen aufweisenden Lackpolyisocyanaten auf Basis von 2,4- und/oder 2,6-Diisocyanatotoluol oder Isophorondiisocyanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits.

Geeignete Blockierungsmittel für diese Polyisocyanate sind beispielsweise einwertige Alkohole wie Methanol, Ethanol, Butanol, Hexanol, Cyclohexanol, Benzylalkohol, Oxime wie Acetoxim, Methylethylketoxim, Lactame wie α-Caprolactam, Phenole, Amine wie Diisopropylamin oder Dimethylpyrazol.

Die hydrophile Modifizierung der Copolymerisatkomponente A) reicht im allgemeinen aus, um auch die Dispergierbarkeit der Vernetzerharze, soweit es sich nicht ohnehin um wasserlösliche oder -dispergierbare Substanzen handelt, zu gewährleisten.

Wasserlösliche bzw. dispergierbare, blockierte Polyisocyanate sind z.B. durch Modifikation mit Carboxylat- und/oder Polyethylenoxidgruppen erhältlich.

Ebenfalls geeignete Vernetzerharze sind niedrigviskose, hydrophobe oder hydrophile Polyisocyanate mit freien Isocyanatgruppen auf Basis aliphatischer, cycloaliphatischer, araliphatischer und/oder aromatischer Isocyanate. Diese Polyisocyanate weisen bei 23°C im allgemeinen eine Viskosität von 10 bis 3500 mPas auf Falls erforderlich, können die Polyisocyanate in Abmischung mit geringen Mengen an inerten Lösemitteln zum Einsatz gelangen, um die Viskosität auf einen Wert innerhalb des genannten Bereiches abzusenken.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A-540 985 beschrieben. Ebenso möglich ist die Hydrophilierung durch Zusatz handelsüblicher Emulgatoren.

Es können auch Mischungen verschiedener Vernetzerharze eingesetzt werden.

In einer bevorzugten Ausführungsform werden Mischungen eines hydrophilen und eines niedrigviskosen hydrophoben Polyisocyanats in Kombination mit den erfindungsgemäßen Dispersionen in wäßrigen 2-Komponenten-Systemen, welche bei Raumtemperatur reaktiv sind, eingesetzt. Bevorzugte Mischungen sind dabei Mischungen aus 30 bis 90 Gew.-% eines hydrophil modifizierten Polyisocyanats auf Basis Hexamethylendiisocyanat und 70 bis 10 Gew.-% eines nicht hydrophil modifizierten Polyisocyanats auf Basis Hexamethylendiisocyanat und/oder Isophorondiisocyanat und/oder Bis-(4-isocyanatocyclohexyl)-methan, sowie Mischungen aus 10 bis 65 Gew.-% eines niedrigviskosen, nicht hydrophil modifizierten Polyisocyanats auf Basis von Hexamethylendiisocyanat mit Isocyanurat-, Biuret-, Allophanat- und/oder Uretdionstruktureinheiten und 90 bis 35 Gew.-% eines hydrophil modifizierten Polyisocyanats auf Basis Isophorondiisocyanat.

Unter niedrigviskos sind dabei vorzugsweise Viskositäten von 10 bis 1500 mPas/23°C zu verstehen.

In einer weiteren bevorzugten Ausführungsform werden Mischungen aus gegebenenfalls hydrophilmodifizierten Polyisocyanaten mit freien Isocyanatgruppen und Aminovernetzerharzen, welche vorzugsweise keine freien Aminogruppen aufweisen, mit den erfindungsgemäßen Bindemitteldispersionen A) kombiniert und vorzugsweise bei Temperaturen von 60 bis 120°C ausgehärtet. Solche Mischungen enthalten vorzugsweise 25 bis 68 Gew.-% Polyisocyanate mit freien Isocyanatgruppen und 75 bis 32 Gew.-% Aminovernetzerharze.

Vor, während oder nach der Herstellung der wäßrigen Bindemittelkombinationen durch Abmischung der Einzelkomponenten und auch im Fall der Herstellung von einkomponentig zu verarbeitenden Beschichtungsmitteln können die üblichen Hilfs- und Zusatzmittel der Lacktechnologie zugesetzt werden, wie z.B. Entschäumungsmittel, Verdickungsmittel, Pigmente, Dispergierhilfmittel, Katalysatoren, Hautverhinderungsmittel, Antiabsetzmittel, Emulgatoren.

Die erfindungsgemäßen Beschichtungsmittel eignen sich für alle Einsatzgebiete, in denen wäßrige Anstrich- und Beschichtungssysteme mit einem erhöhten Eigenschaftsprofil Verwendung finden, z.B. Beschichtung mineralischer Baustoff-Oberflächen, Lackierung und Versiegelung von Holz und Holzwerkstoffen, Beschichtung metallischer Oberflächen; Beschichtung und Lackierung asphalt- oder bitumenhaltiger Straßenbeläge, Lackierung und Versiegelung diverser

**EP 0 947 557 B1**

Kunststoffoberflächen.

Bei den unter erfindungsgemäßer Verwendung der erfindungsgemäßen Bindemittelkombinationen hergestellten Lacken bzw. Beschichtungsmitteln handelt es sich um Grundierungen, Füller, pigmentierte oder transparente Decklacke sowie Einschichtlacke, die in der Einzel- und Serienapplikation, z.B. im Bereich der Industrielackierung, Automobil-Erst- und -Reparaturlackierung, Anwendung finden können.

Bevorzugte Verwendungen der erfindungsgemäßen in Wasser dispergiert und/oder gelöst vorliegenden Copolymerisate A) ist in Kombination mit Polyisocyanaten bzw. besonders bevorzugt in Kombination mit Mischungen von hydrophilen und hydrophoben Polyisocyanaten zur Beschichtung bzw. Lackierung metallischer Oberflächen oder Kunststoffen bei Raumtemperatur bis 140°C, oder in Kombination mit Aminovemetzerharzen zur Beschichtung und Lackierung metallischer Oberflächen bei 110 bis 180°C in Form von Einschichtlacken oder als Decklacke.

Die Herstellung der Beschichtung kann nach den unterschiedlichen Spritzverfahren wie beispielsweise Luftdruck-, Airless- oder Elektrostatik-Spritzverfahren unter Verwendung von Ein- oder gegebenenfalls Zweikomponenten-Spritzanlagen erfolgen. Die erfindungsgemäß herzustellenden und zu verwendenden Lacke und Beschichtungsmassen können jedoch auch nach anderen Methoden, beispielsweise durch Strich, Rollen oder Rakeln appliziert werden.

**Beispiele**

**Beispiel 1**

In einem 6 l-Reaktionsgefäß mit Rühr-, Kühl- und Heizvorrichtung werden 253 g Solvent Naphta und 88 g Butylglykol vorgelegt und auf 155°C erhitzt. Dann wird eine Mischung I) aus 125 g Styrol, 125 g Methylmethacrylat, 720 g Butylacrylat, 275 g Butylmethacrylat und 765 g Hydroxypropylmethacrylat in 3 Stunden und direkt im Anschluß daran eine Mischung II) aus 75 g Butylacrylat, 185 g Hydroxypropylmethacrylat, 25 g Methylmethacrylat, 13 g Butylmethacrylat und 56 g Acrylsäure in 1½ Stunden zudosiert. Parallel dazu werden, beginnend mit der Zugabe von Mischung I), 98 g Di-tert.-Butylperoxid in 100 g Solvent Naphta in 5 Stunden zudosiert. Nach weiteren 2 Stunden Rühren bei 145°C wird auf 100°C abgekühlt, 71 g Dimethylethanolamin zugegeben und in 2500 g destilliertem Wasser dispergiert. Man erhält ein in Wasser dispergiert vorliegendes wäßrige Copolymerisat A1) mit einem Festkörpergehalt von 45 %, einer Säurezahl von 18.5 (100 %ig) und einer OH-Zahl von 155 (100 %ig).

**Beispiel 2**

In einem 6 l-Reaktionsgefäß mit Rühr-, Kühl- und Heizvorrichtung werden 151 g Butylglykol und 221 g Solvent Naphta eingewogen und auf 145°C erhitzt. Dann wird eine Mischung I) aus 915 g Methylmethacrylat, 603 g Butylmethacrylat und 445 g Hydroxyethylmethacrylat in 3 Stunden und direkt im Anschluß daran eine Mischung II) aus 143 g Methylmethacrylat, 85 g Butylacrylat, 163 g Hydroxyethylmethacrylat und 60 g Acrylsäure in 1 ½ Stunden zudosiert. Parallel dazu werden 87,5 g Di-tert. Butylperoxid und 70 g Butylglykol in 5 Stunden zudosiert. Nach weiteren 2 Stunden Rühren bei 45°C wird auf 100°C abgekühlt, 78 g (Neutralisationsgrad 105 %) Dimethylethanolamin zugegeben und mit 2800 g destilliertem Wasser dispergiert. Man erhält ein in Wasser dispergiert vorliegendes Copolymerisat A2) mit einem Festkörpergehalt von 43 %, einer Säurezahl von 19,3 (100 %ig) und einer OH-Zahl von 109 (100 %ig).

Der Anteil Copolymerisat I) an A2) beträgt 81,32 %, der Anteil Copolymerisat II) 18,68 %. Im Copolymerisat II) sind 50,55 Gew.-% hydrophobe Monomere IIa), 36,14 Gew.-% hydroxyfunktionelle Monomere IIb) und 13,30 Gew.-% carboxylfunktionelle Monomere IIc) enthalten, wobei der Gehalt an carboxylfunktionellen Monomeren an A2) 2,48 Gew.-% beträgt und wobei der Gehalt an hydroxyfunktionellen Monomeren im Copolymerisat II) um 59,48 % höher als im Copolymerisat I) ist.

**Beispiel 3**

In einem 6 l-Reaktionsgefäß mit Rühr-, Kühl- und Heizvorrichtung werden 186 g Butylglykol und 186 g Solvent Naphta eingewogen und auf 143°C erhitzt. Dann wird eine Mischung I) aus 750 g Methylmethacrylat, 125 g Styrol, 445 g Hydroxyethylmethacrylat, 538 g Butylacrylat und 87 g Butylmethacrylat in 3 Stunden und direkt im Anschluß daran eine Mischung II) aus 128 g Methylmethacrylat, 180 g Hydroxyethylmethacrylat, 100 g Butylacrylat und 60 g Acrylsäure in 1½ Stunden zudosiert. Parallel dazu werden in 5 Stunden 88 g Di-tert. Butylperoxid in 70 g einer 1:1 Mischung von Butylglykol und Solvent Naphta zudosiert. Nach weiteren 2 Stunden Rühren bei 145°C wird auf 100°C abgekühlt, 76 g Dimethylethanolamin zugegeben und in 2700 g Wasser dispergiert. Man erhält ein in Wasser dispergiert vorliegendes Copolymerisat A3) mit einem Festkörpergehalt von 44 % bei einer Viskosität von ca.800 mPas (23°C, Schergefälle 40$^{-1}$). Der pH-Wert (10 %ig in Wasser) beträgt 8,1, der Neutralisationsgrad beträgt 105 %. Die Dispersion ist gut filtrierbar und feinteilig (mittlere Teilchengröße ca.105 nm) und somit für hochwertige Lackanwendungen sehr gut geeignet.

### Vergleichsbeispiel 4

Beispiel 3 wird reproduziert, allerdings werden die Monomermischungen I) und II) gleichzeitig zudosiert. Nach Zugabe von Neutralisationsmittel und Wasser erhält man eine extrem grobteilige, instabile Dispersion, die schnell zweiphasig wird und für Lackanwendungen ungeeignet ist.

### Vergleichsbeispiel 5

Beispiel 3 wird reproduziert, allerdings werden Monomermischung I) und II) gleichzeitig zudosiert sowie die Acrylsäuremenge unter entsprechender Reduzierung der Methylmethacrylatmenge verdoppelt. Nach Zugabe von Neutralisationsmittel (Neutralisationsgrad 105 %) und Wasser erhält man eine stabile Dispersion, die allerdings lediglich 31 % Festkörpergehalt aufweist. Die Säurezahl beträgt 39 (100 %ig), die OH-Zahl 109 (100 %ig).

Setzt die gemäß Vergleichsbeispiel 5 erhaltene Dispersion gemäß Anwendungsbeispiel 10 ein, so erhält man einen deutlich reduzierten Lackfestkörper (44 statt 53 %). Die störungsfrei erzielbare Schichtstärke liegt deutlich niedriger, die filmoptischen Eigenschaften wie z.B. der Glanz fallen deutlich ungünstiger aus (Glanz 20°/60°: 52/78 statt 74/95 bei Verwendung von Dispersion A3).

Bei Verwendung der gemäß Vergleichsbeispiel 5 erhaltenen Dispersion in Anwendungsbeispiel 11 erhält man ein reduziertes Potlife (ca. 4 Stunden statt >6 Stunden bei Verwendung von Dispersion A3)). Die Wasserfestigkeit des getrockneten Filmes ist bei Verwendung der Dispersion aus Vergleichsbeispiel 5 im Vergleich zur Dispersion A3) reduziert (nach 72 Stunden Belastung mit einem mit Wasser getränkten Wattebausch ist Weißanlaufen und beginnendes Erweichen des Filmes erkennbar, während bei Filmen auf Basis von Dispersion A3) keine Veränderung erkennbar ist).

### Vergleichsbeispiel 6

Beispiel 3 wird reproduziert, allerdings wird zuerst die die hydrophil-hydrophobe Monomermischung II) und dann die hydrophobe Monomermischung I) zugegegeben. Man erhält ein in Wasser dispergiert vorliegendes Copolymerisat mit einem Festkörpergehalt von 36 %, einer Säurezahl von 19,2 (100 %ig) und einer OH-Zahl von 109 (100 %ig). Der pH-Wert (10 % in Wasser) liegt bei 8,1, der Neutralisationsgrad beträgt 105 %. Die Dispersion ist grobteilig (mittlere Teilchengröße ca. 250 nm), nur schwer filtrierbar und hat einen deutlich niedrigeren Festkörpergehalt. Bei Einsatz in Lacken im Vergleich zur Dispersion gemäß Beispiel 3) erhält man Lacke mit niedrigerem Festkörpergehalt, sowie Beschichtungen mit deutlich reduzierten Glanzwerten. Außerdem ist die Verträglichkeit mit einigen Vernetzerharzen weniger gut ausgeprägt, es werden teilweise trübe Filme und Beschichtungen erhalten.

Folgende Vernetzerharze werden in den Anwendungsbeispielen verwendet:

Polyisocyanat I:

Niedrigviskoses hydrophobes Polyisocyanat mit Isocyanuratstruktureinheiten auf Basis von Hexamethylendiisocyanat, Viskosität bei 23°C: ca. 1200 mPas, NCO-Gehalt: ca. 23,5 %.

Aminovernetzerharz II:

Handelsübliches Melaminharz ®Cymel 327 (Cytec).

Polyisocyanat III:

Hydrophiliertes Polyisocyanat mit Isocyanatstruktureinheiten auf Basis von Hexamethylendiisocyanat, Viskosität bei 23°C: ca. 3500 mPas, NCO-Gehalt: ca. 17 %.

Polyisocyanat IV:

Hydrophiliertes Polyisocyanat mit Isocyanuratstruktureinheiten auf Basis von Isophorondiisocyanat, 70 %ig in Methoxypropylacetat/Xylol (1:1), Viskosität bei 23°C: ca. 500 mPas, NCO-Gehalt: ca. 9,5 %.

Polyisocyanat V:

40 %ige wäßrige Dispersion eines blockiertes Polyisocyanatvernetzers (®Bayhydur BL 5140®, Bayer).

**9**

**Anwendungsbeispiel 7**

142 g der Dispersion A1) wird mit 33 g Wasser verdünnt (Komponente A) und mittels eines Dissolvers mit Komponente B), bestehend aus 45 g Polyisocyanatvernetzer I, 4,4 g ®Tinuvin 1130 (50 % in Butylglykolacetat, Ciba Geigy), 2,2 g ®Tinuvin 292 (50 % in Butylglykolacetat, Ciba Geigy), 1,1 g ®Baysilon OL 44 (10 % in Butylglykolacetat, Bayer) und 22,8 g Butyldiglykolacetat vermischt.

Das so erhaltene reaktive 2-Komponenten Polyurethansystem hat einen Festkörpergehalt von 45 %, das NCO: OH-Verhältnis beträgt ca. 1,5:1. Das Potlife beträgt >6 Stunden, die Viskosität bleibt in diesem Zeitraum annähernd konstant.

Der Klarlack wurde auf ein mit einem Basislack beschichteten Aluminiumblech bzw. auf Glasplatte durch Spritzapplikation aufgetragen. Nach Vortrocknung für 10 Minuten bei 80°C wurde der Lack 30 Minuten bei 130°C ausgehärtet. Am gehärteten Lackfilm wurden folgende Eigenschaften bestimmt:

| | |
|---|---|
| Glanz (nach Gardner 20°): | 85 |
| DOI-Wert: | 90 |
| Lösemittelbeständigkeit[1]: | 0/0/0/3 |
| Wasserfestigkeit: | sehr gut |
| Beständigkeit gegen 2 %ige Schwefelsäure: | sehr gut |
| Schwitzwassertest (DIN 50017) 244 Std.: | sehr gut |

1) Belastung mit Xylol/Methoxypropylacetat/Ethylacetat/ Aceton für 1 Minute. Anschließend Beurteilung des Films: 0 = ohne Veränderung (bester Wert) bis 5 = abgelöst (schlechtester Wert).

**Anwendungsbeispiel 8**

254 g der Dispersion A2), 42 g Wasser und 170 g Titandioxid ®Bayertitan R-KB-4 (Bayer) werden angerieben und mit 1,1 g eines handelsüblichen Verdickers, 15,4 g des Polyisocyanatvernetzers I) sowie 20,3 g einer 80 %igen Lösung vom Polyisocyanatvernetzer III) in Methoxypropylacetat mittels Dissolver vermischt. Anschließend wird mit Wasser auf eine Viskosität von 28" im DIN 4 Becher verdünnt, der Lackfestkörper beträgt dann ca. 52 %. Das Potlife des Lackes liegt bei ca. 6 Stunden.

Nach der Applikation trocknet der Lackfilm in 30 Minuten staubfrei und in 2 Stunden 30 Minuten klebfrei zu hochglänzenden Filmen auf. Die mechanischen Eigenschaften nach Aushärtung sind sehr gut (Pendelhärte 120", Erichsentiefung >9 mm). Die Haftung auf Stahlblech ist ausgezeichnet, ebenso die Xylol- bzw. Acetonbeständigkeit. Bei der Applikation eines "Keils", d.h. eines Films mit zunehmender Schichtstärke liegt die Blasengrenze bei >140 μm, d.h. es sich sehr hohe Schichtstärken ohne Filmstörungen erreichbar. Dadurch können auch kritische Objekte, bei denen z.B. durch Überlappung bei Spritzapplikation zu hohe Schichtstärken auftreten, sicher lackiert werden.

**Anwendungsbeispiel 9**

56,9 g Dispersion A1), 12,8 g Aminovernetzerharz ®Cymel 327 (Cytec), 0,8 g ®Tinuvin (50 % in Butyldiglykol, Ciba Geigy), 1,5 g ®Tinuvin 1130 (50 % in Butyldiglykol, Ciba Geigy), 1 g ®Baysilone OL 44 (10 % in Butyldiglykol, Bayer) 0,3 g ®Byk 333 (25 % in Wasser, Byk Chemie), 0,2 g ®Byk 345 (Byk Chemie) werden vermischt und auf einen Festkörpergehalt von 40 % eingestellt. Dieser Klarlack wird auf entfettete Metallbleche appliziert und nach 10 Minuten Ablüften bei 60°C für 20 Minuten bei 160°C eingebrannt.

Man erhält einen klaren, hochglänzenden (Glanz nach Gardner, 20°; 89; DOI: 100) Lackfilm mit sehr guten mechanischen Eigenschaften (Pendelhärte nach König DIN 53157; 192 Sekunden, Erichsentiefung nach DIN 53156: 6 mm) sowie sehr guter Chemikalienbeständigkeit (z.B. bei Belastung durch Baumharz, Bremsflüssigkeit, Pankreaktion, Natronlauge usw.).

**Anwendungsbeispiel 10**

350 g Dispersion A3), 8 g ®Surfynol 104 (Air products), 48 g Wasser, 300 g Titandioxid ®Bayertitan R-KB-4 (Bayer) werden in einem Schüttler angerieben. Das so erhaltene Mahlgut wird mit 30 g Dispersion A3), 33 g Aminovernetzerharz II und 160 g Polyisocyanatvernetzer V, 6 g ®Acrysol RM8 (20 % in Ethanol, Rohm & Haas), 10 g ®Byk 011 (Byk Chemie) vermischt und mit Wasser auf eine Viskosität von ca. 30 Sekunden bei 23°C im DIN 4 Auslaufbecher eingestellt. Der Lackfestkörper beträgt ca. 53 %. Nach Applikation auf entfettetes Stahlblech werden die Lacke für 20 Minuten bei 160°C eingebrannt, die Trockenfilmstärke beträgt ca. 35 μm. Der Glanz 20°/60° beträgt 74/95. Die mechanischen Eigenschaften sind sehr gut (Erichsendehnung 6 mm, Pendelhärte 148 Sekunden). Die Lösemittelbeständigkeit (Wischtest mit einem mit Methylethylketon getränkten Wattebausch, 100 Doppelhübe ohne Befund) ist sehr gut. Die Lagerstabilität ist >6 Monate.

### Anwendungsbeispiel 11

Dispersion A3) wird mit einem gewichtsmäßigen 1:1-Gemisch der Polyisocyanatvemetzer I) und IV) unter den Dissolver vermischt und mit Wasser auf eine Viskosität von ca. 30 Sekunden im DIN 4 Becher eingestellt. Das NCO: OH-Verhältnis wurde mit 1,4:1 gewählt. Das Potlife der Mischung beträgt mehr als 6 Stunden. Es wird ein Lackfilm auf Glasplatte aufgezogen und bei Raumtemperatur ausgehärtet, die Trockenfilmstärke betrug ca. 45 μm. Der Lackfilm ist hochglänzend (Glanz nach Gardener 20°: 82) und trocknet in ca. 3 Stunden klebfrei und klar auf. Die Pendelhärte nach einem Tag beträgt 95, nach 7 Tagen 130 Sekunden. Die Aceton- und Xylolfestigkeit ist sehr gut, ebenso die Wasserfestigkeit.

### Beispiel 12

In einem 6 l-Reaktionsgefäß mit Rühr-, Kühl-, Heizvorrichtung werden 186 g Solvent Naphta und 186 g Butylglykol vorgelegt und auf 143°C erhitzt. Dann wird eine Mischung I) aus 750 g Methylmethacrylat, 125 g Styrol, 415 g Hydroxyethylmethacrylat, 493 g Butylacrylat und 87 g Butylmethacrylat in 3 Stunden, anschließend eine Mischung II) aus 128 g Methylmethacrylat, 180 g Hydroxyethylmethacrylat, 100 g Butylacrylat und 60 g Acrylsäure in 1 1/2 Stunden und anschließend daran eine Mischung III) aus 30 g Hydroxyethylmethacrylat und 45 g Butylacrylat in 1/4 Stunde zudosiert. Gleichzeitig beginnend mit der Zugabe von I) wird in 5 Stunden eine Lösung von 88 g Di-tert. Butylperoxid in 35 g Butylglykol und 35 g Solvent Naphta zudosiert. Nach weiteren 2 Stunden Rühren bei 143°C wird auf 100°C abgekühlt, 76 g Dimethylethanolamin zugegeben und in 2500 g Wasser dispergiert. Man erhält ein in Wasser dispergiert vorliegendes Copolymerisat A12) mit einem Festkörpergehalt von 45 %, einer Säurezahl von 18,9 (100 %) und einer OH-Zahl von 109 (100 %).

Mit A12) hergestellte Lacke zeigen nach Aushärtung die gleich guten Eigenschaften wie das von der Bruttomonomerzusammensetzung identische A3). Allerdings zeigt A12) eine verbesserte Viskositätsstabilität bei Lagerung. Die Dispersion zeigt auch nach längerem Lagern keine Änderung der Viskosität, während A3) die von vielen Dispersionen bekannten leichten Viskositätsschwankungen bei Lagerung aufweist, die die Lackeigenschaften allerdings nicht negativ beeinflussen.

### Vergleichsbeispiel 13

Beispiel 3 wird reproduziert, allerdings wird anstelle von Solvent Naphta bzw. Butylglykol Methoxypropylacetat eingesetzt.

Das so erhaltene, in Wasser dispergiert vorliegende Copolymerisat A13), enthält viele Stippen und Gelteilchen, ist nicht filtrierbar und somit für höherwertige Lackanwendungen nicht geeignet. Darüber hinaus wird bei 50°C Lagerung ein deutlicher Anstieg der Säurezahl beobachtet, der auf eine Verseifung des Lösemittels Methoxypropylacetat zurückzuführen ist. Dies führt zu einer pH-Wert-Senkung und verschlechterten Lack- und Beschichtungseigenschaften.

### Patentansprüche

**1.**    In Wasser dispergiert und/oder gelöst vorliegende Copolymerisate A), bestehend aus

  I) einem hydrophoben Copolymerisat I), aus

    Ia) (Meth)-acrylsäureestern in mit $C_1$ bis $C_{18}$ Kohlenwasserstoffresten im Alkoholteil und/oder Vinylaromaten und/oder Vinylestern, und
    Ib) hydroxyfunktionellen Monomeren,

  II) einem hydrophil-hydrophoben Copolymerisat II), aus

    IIa) (Meth)-acrylsäureestern $C_1$ bis $C_{18}$ Kohlenwasserstoffresten im Alkoholteil und/oder Vinylaromaten und/oder Vinylestern,

IIb) hydroxyfunktionellen Monomeren, und

IIc) säurefunktionellen Monomeren,

und gegebenenfalls

III) einem hydrophoben Copolymerisat III), aus

IIIa) hydroxy- und nichtfunktionelle (Meth)-acrylsäureestern bzw. Vinylaromaten,

wobei der Anteil am Copolymerisat A) für

Ia) 30 bis 80 Gew.-%,
Ib) 5 bis 45 Gew.-%,
IIa) 4 bis 20 Gew.-%,
IIb) 4 bis 15 Gew.-%.
IIc) 0,8 bis 3,0 Gew.-% und
IIIa) 0 bis 16 Gew.-%

beträgt und die Summe aus Ia),
Ib), IIa), IIb) IIc) und gegebenenfalls IIIa) 100 Gew.-% beträgt, wobei die Säurezahl 10 bis 28 mg KOH/g Substanz, der Anteil der säurefunktionellen Monomeren IIc) an der in A) enthaltenen Menge von II) <25 Gew.-% und wobei der Anteil an hydroxyfunktionellen Monomeren IIb) in der Menge II) höher ist, als der Anteil an hydroxyfunktioneller Monomerer Ib) in I).

2. In Wasser dispergiert und/oder gelöst vorliegende Copolymerisate A), gemäß Anspruch 1, **gekennzeichnet dadurch, daß** der Anteil der Monomeren IIa) an dem in A) enthaltenen Copolymerisat II) 25 bis 65 Gew.-%, der Anteil der Monomeren IIb) an dem in A) enthaltenen Copolymerisat II) 25 bis 65 Gew.-%, der Anteil des Copolymerisats I) 60 bis 90 Gew.-%, der Anteil des Copolymerisats II) 10 bis 40 Gew.-% und der Anteil des Copolymerisats III) 0 bis 16 Gew.-% an A) beträgt und wobei mindestens 70 % der Carboxylgruppen in Salzform vorliegen.

3. In Wasser dispergiert und/oder gelöst vorliegende Copolymerisate A) gemäß den Ansprüchen 1 und 2, **dadurch gekennzeichnet, daß** in Copolymerisat I) enthalten sind

Ia) 40 bis 80 Gew.-% (Meth)-acrylsäureester mit $C_1$ bis $C_{18}$ aliphatischen Kohlenwasserstoffresten im Alkoholteil und/oder Vinylaromaten,
Ib) 7,5 bis 35 Gew.-% hydroxyfunktionelle (Meth)-acrylsäureester,

in Copolymerisat II) enthalten sind

IIa) 4 bis 10 Gew.-% (Meth)-acrylsäureester mit $C_1$ bis $C_{18}$ aliphatischen Kohlenwasserstoffresten im Alkoholteil und/oder Vinylaromaten,
IIb) 6 bis 12 Gew.-% hydroxyfunktionelle (Meth)-acrylsäureester,
IIc) 1,5 bis <2,5 Gew.-% säurefunktionelle Monomere,

und im Copolymerisat III) enthalten sind

IIIa) 0 bis 16 Gew.-% hydroxy- und nichtfunktionelle (Meth)-acrylsäureester bzw. Vinylaromaten,

wobei die carboxylfunktionellen Monomere in solchen Mengen eingesetzt werden, daß eine Säurezahl von >12 bis <25 mg KOH/g Substanz resultiert und wobei >90 % der Carboxylgruppen in Salzform vorliegen.

4. In Wasser dispergiert und/oder gelöst vorliegende Copolymerisate A) gemäß den Ansprüchen 1 bis 3, **dadurch gekennzeichnet, daß** der Anteil Copolymerisat I) >80 bis 90 Gew.-%, der Anteil Copolymerisat II) 10 bis <20 Gew.-% an A), sowie der Anteil carboxylfunktioneller Monomere IIc) an dem Copolymerisat II) 6 bis 18 Gew.-% beträgt und eine Säurezahl von 15 bis 20 mg KOH/g Substanz ergibt wobei Neutralisationsmittel in solchen Mengen zugesetzt wird, daß nach Überführung aller Carboxylgruppen in die Salzform ein pH-Wert von 7,9 bis 10,0 resultiert und noch freies Neutralisationsmittel enthalten ist.

5. In Wasser dispergiert und/oder gelöst vorliegende Copolymerisate A) gemäß Anspruch 1, **dadurch gekennzeich-**

**net, daß** ein Lösemittelgemisch aus 30 bis 95 Gew.-% eines hydrophoben, nicht wassermischbaren, unverseifbaren Lösemittels i) und 5 bis 70 Gew.-% eines wassermischbaren bzw. wasserlöslichen, unverseifbaren Lösemittels ii) in der Dispersion in einer Menge von <12 Gew.-% enthalten ist.

6. In Wasser dispergiert und/oder gelöst vorliegende Copolymerisate A) gemäß Anspruch 1, **dadurch gekennzeichnet, daß** ein Lösemittelgemisch aus 50 bis 85 Gew.-% eines hydrophoben, nicht wassermischbaren, unverseifbaren Lösemittels i) und 15 bis 50 Gew.-% eines wassermischbaren bzw. wasserlöslichen, unverseifbaren Lösemittels ii) in der Dispersion in einer Menge von <9 Gew.-% enthalten ist.

7. In Wasser dispergiert und/oder gelöst vorliegende Copolymerisate A) gemäß Anspruch 1, **dadurch gekennzeichnet, daß** der Anteil Copolymerisat III) an der Copolymerisatdispersion A) 3 bis 13 Gew.-% beträgt.

8. Verfahren zur Herstellung von in Wasser dispergiert und/oder gelöst vorliegenden Copolymerisaten A) gemäß Anspruch 1, **dadurch gekennzeichnet** daß in einem Lösemittelgemisch aus 30 bis 95 Gew.-% eines unverseifbaren, nicht wassermischbaren, hydropoben Lösemittel und 5 bis 70 Gew.-% eines unverseifbaren, wassermischbaren, hydrophilen Lösemittels eine radikalisch initiierte Copolymerisation von

> Monomeren Ia) und
> Monomeren Ib)

zu einer Menge von 60 bis 90 Gew.-% eines hydrophoben, hydroxyfunktionellen Copolymerisat I), im Anschluß daran eine radikalisch initiierte Copolymerisation von

> Monomeren IIa),
> Monomeren IIb) und
> Monomeren IIc)

zu einer Menge von 10 bis 40 Gew.-% eines hydrophil-hydrophoben, hydroxy- und carboxyfunktionellen Copolymerisats II) und gegebenenfalls im Anschluß daran eine radikalisch initiierte Copolymerisation von

> Monomeren IIIa)

zu einer Menge von <16 Gew.-% eines hydroxyfunktionellen, hydrophoben Copolymerisats III) derart durchgeführt wird, daß nach Überführung von mindestens 70 % der eingebauten Carboxylgruppen in Salzgruppen und anschlie-ßender oder gleichzeitiger Dispergierung ein vernetzbares, in Wasser dispergiert und/oder gelöst vorliegendes Copolymerisate A) resultiert, das eine Säurezahl (einschließlich der bereits in Salzform vorliegenden Carboxylgruppen) von 10 bis 28 mg KOH/g Substanz aufweist, wobei der prozentuale Anteil der hydroxyfunktionellen Monomeren IIb) am Copolymerisat II) höher ist, als der prozentuale Anteil der hydroxyfunktionellen Monomeren Ib) am Copolymerisat I).

9. Verfahren gemäß Anspruch 8, **dadurch gekennzeichnet, daß** das Lösemittelgemisch frei von Wasser ist, zu 50 bis 85 Gew.-% aus Kohlenwasserstoffen bzw. Gemische von Kohlenwasserstoffen mit anderen hydrophoben, unverseifbaren Lösemitteln und zu 15 bis 50 Gew.-% aus Alkoholen, Ethern, Ketonen und Gemischen dieser Lösemittel mit anderen wassermischbaren bzw. -löslichen, unverseifbaren Lösemitteln besteht sowie carboxylfunktionelle Monomere in einer solchen Menge zugesetzt werden, daß Säurezahlen von 15 bis 20 mg KOH/g Substanz resultieren, und nach Zugabe des Neutralisationsmittels und Salzbildung noch freies Neutralisationsmittel enthalten ist.

10. Wäßrige Bindemittelkombination enthaltend ein in Wasser dispergiert und/oder gelöst vorliegendes Copolymerisat A) gemäß den Ansprüchen 1 bis 7 und ein Vernetzerharz.

11. Wäßrige Bindemittelkombination gemäß Anspruch 10, in der das Vernetzerharz ausgewählt ist aus Amid- und Amin-Formaldehydharzen, Phenolharzen, Aldehyd- und Ketonharzen, blockierten Polyisocyanaten, niedrigviskosen, hydrophoben oder hydrophilen Polyisocyanaten mit freien Isocyanatgruppen auf Basic aliphatischer, cycloaliphatischer, araliphatischer und/oder aromatischer Isocyanate, oder Mischungen verschiedener Vernetzerharze.

12. Wäßrige Bindemittelkombination gemäß Anspruch 10 aus 50 bis 95 Gew.-% eines in Wasser dispergiert und/oder gelöst vorliegenden Copolymerisats A) gemäß den Ansprüchen 1 bis 7 und 5 bis 50 Gew.-% einer Mischung aus 30 bis 90 Gew.-% eines hydrophil modifizierten Polyisocyanats auf Basis von Hexamethylendiisocyanat und 70 bis 10 Gew.-% eines nicht hydrophil modifiziertenPolyisocyanats auf Basis von Hexamethylendiisocyanat und/oder Isophorondiisocyanat und/oder Bis-(4-isocyanatocyclohexyl)-methan.

13. Wäßrige Bindemittelkombination gemäß Anspruch 10 aus 50 bis 95 Gew.-% eines in Wasser dispergiert und/oder gelöst vorliegenden Copolymerisats A) gemäß den Ansprüchen 1 bis 7 und 5 bis 50 Gew.-% einer Mischung aus 10 bis 65 Gew.-% eines nicht hydrophil modifizierten Polyisocyanats der Viskosität von 10 bis 1500 mPas/23°C mit Isocyanurat- und/oder Biuret- und/oder Allophanat- und/oder Uretdionstruktureinheiten auf Basis von Hexamethylendiisocyanat und 90 bis 35 Gew.-% eines hydrophil modifizierten Polyisocyanats auf Basis von Isophorondiisocyanat und/oder Bis-(4-isocyanacyclohexyl)-methan.

14. Wäßrige Bindemittelkombination gemäß Anspruch 10 aus 50 bis 95 Gew.-% eines in Wasser dispergiert und/oder gelöst vorliegenden Copolymerisats A) gemäß den Ansprüchen 1 bis 7 und 5 bis 50 Gew.-% einer Mischung aus gegebenenfalls hydrophil modifizierten Polyisocyanaten mit freien Isocyanatgruppen und Aminovernetzerharzen.

15. Verwendung der in Wasser dispergiert und/oder gelöst vorliegenden Copolymerisate A) gemäß Anspruch 1 bis 7 bzw. der Bindemittelkombinationen gemäß den Ansprüchen 10 bis 14 Austrich- und Beschichtungssystemen.

16. Verwendung gemäß Anspruch 15 Lacken.

## Claims

1. Copolymers A) which exist dispersed and/or dissolved in water consisting of

   I) a hydrophobic copolymer I), of

   Ia) (meth)acrylic acid esters comprising $C_1$ to $C_{18}$ hydrocarbon residues in their alcohol moiety, and/or aromatic vinyl compounds and/or vinyl esters and
   Ib) hydroxy-functional monomers,

   II) a hydrophilic-hydrophobic copolymer II) of

   IIa) (meth)acrylic acid esters comprising $C_1$ to $C_{18}$ hydrocarbon residues in their alcohol moiety, and/or aromatic vinyl compounds and/or vinyl esters,
   IIb) hydroxy-functional monomers and
   IIc) acid-functional monomers,

   and optionally
   III) a hydrophobic copolymer III) of

   IIIa) hydroxy- and non-functional (meth)acrylic acid esters or aromatic vinyl compounds,

   wherein, of the copolymer A),

   Ia) accounts for 30 to 80 wt.%,
   Ib) for 5 to 45 wt.%,
   IIa) for 4 to 20 wt.%,
   IIb) for 4 to 15 wt.%,
   IIc) for 0.8 to 3.0 wt.% and
   IIIa) for 0 to 16 wt.%

   and the sum of Ia), Ib), IIa), IIb), IIc) and optionally IIIa) amounts to 100 wt.%, wherein the acid value is 10 to 28 mg KOH/g of substance, the proportion of acid-functional monomers IIc) in the amount of II) contained in A) is <25 wt.% and wherein the proportion of hydroxy-functional monomers IIb) in the amount of II) is higher than the proportion of hydroxy-functional monomers Ib) in I).

2. Copolymers A) which exist dispersed and/or dissolved in water according to claim 1, **characterised in that** the proportion of monomers IIa) in copolymer II) contained in A) is 25 to 65 wt.%, the proportion of monomers IIb) in copolymer II) contained in A) is 25 to 65 wt.%, the proportion of copolymer I) is 60 to 90 wt.%, the proportion of copolymer II) is 10 to 40 wt.% and the proportion of copolymer III) is 0 to 16 wt.% in A), and wherein at least 70% of the carboxyl groups exist in salt form.

3.  Copolymers A) which exist dispersed and/or dissolved in water according to claims 1 and 2, **characterised in that** copolymer I) contains

    Ia) 40 to 80 wt.% of (meth)acrylic acid esters comprising $C_1$ to $C_{18}$ aliphatic hydrocarbon residues in their alcohol moiety, and/or aromatic vinyl compounds,
    IIb) 7.5 to 35 wt.% of hydroxy-functional (meth)acrylic acid esters,

    copolymer II) contains

    IIa) 4 to 10 wt.% of (meth)acrylic acid esters comprising $C_1$ to $C_{18}$ aliphatic hydrocarbon residues in their alcohol moiety, and/or aromatic vinyl compounds,
    IIb) 6 to 12 wt.% of hydroxy-functional (meth)acrylic acid esters,
    IIc) 1.5 to <2.5 wt.% of acid-functional monomers,

    and copolymer III) contains

    IIIa) 0 to 16 wt.% of hydroxy- and non-functional (meth)acrylic acid esters or aromatic vinyl compounds,

    wherein the carboxyl-functional monomers are used in amounts such that an acid value of >12 to <25 mg KOH/g of substance results and wherein >90% of the carboxyl groups exist in salt form.

4.  Copolymers A) which exist dispersed and/or dissolved in water according to claims 1 to 3, **characterised in that** the proportion of copolymer I) is >80 to 90 wt.% and the proportion of copolymer II) is 10 to <20 wt.% in A), and the proportion of carboxyl-functional monomers IIc) in copolymer II) is 6 to 18 wt.% and results in an acid value of 15 to 20 mg KOH/g of substance, wherein a neutralising agent is added in amounts such that, once all the carboxyl groups have been converted into salt form, a pH of 7.9 to 10.0 results and free neutralising agent is still present.

5.  Copolymers A) which exist dispersed and/or dissolved in water according to claim 1, **characterised in that** a solvent mixture of 30 to 95 wt.% of a hydrophobic, water-immiscible, unsaponifiable solvent i) and 5 to 70 wt.% of a water-miscible or water-soluble, unsaponifiable solvent ii) is contained in the dispersion in an amount of <12 wt.%.

6.  Copolymers A) which exist dispersed and/or dissolved in water according to claim 1, **characterised in that** a solvent mixture of 50 to 85 wt.% of a hydrophobic, water-immiscible, unsaponifiable solvent i) and 15 to 50 wt.% of a water-miscible or water-soluble, unsaponifiable solvent ii) is contained in the dispersion in an amount of <9 wt.%.

7.  Copolymers A) which exist dispersed and/or dissolved in water according to claim 1, **characterised in that** the proportion of copolymer III) in copolymer dispersion A) is 3 to 13 wt.%.

8.  A method for producing copolymers A) which exist dispersed and/or dissolved in water according to claim 1, **characterised in that**, in a solvent mixture of 30 to 95 wt.% of an unsaponifiable, water-immiscible, hydrophobic solvent and 5 to 70 wt.% of an unsaponifiable, water-miscible, hydrophilic solvent, a free radically initiated copolymerisation is carried out of

    monomers Ia) and
    monomers Ib)

    to form an amount of 60 to 90 wt.% of a hydrophobic, hydroxy-functional copolymer I), thereafter a free radically initiated copolymerisation is carried out of

    monomers IIa),
    monomers IIb) and
    monomers IIc)

    to form an amount of 10 to 40 wt.% of a hydrophilic-hydrophobic, hydroxy- and carboxy-functional copolymer II), and optionally thereafter a free radically initiated copolymerisation is carried out of

monomers IIIa)

to form an amount of <16 wt.% of a hydroxy-functional, hydrophobic copolymer III), in a manner such that once at least 70% of the incorporated carboxyl groups have been converted into salt groups and subsequently or simultaneously dispersed, a crosslinkable copolymer A) results, which exists dispersed and/or dissolved in water, which has an acid value (including the carboxyl groups which already exist in salt form) of 10 to 28 mg KOH/g of substance, wherein the percentage proportion of hydroxy-functional monomers IIb) in copolymer II) is higher than the percentage proportion of hydroxy-functional monomers Ib) in copolymer I).

9. A method according to claim 8, **characterised in that** the solvent mixture is free from water and consists of 50 to 85 wt.% of hydrocarbons or mixtures of hydrocarbons with other hydrophobic, unsaponifiable solvents and of 15 to 50 wt.% of alcohols, ethers, ketones and mixtures of these solvents with other water-miscible or water-soluble, unsaponifiable solvents, and **in that** carboxyl-functional monomers are added in an amount such that acid values of 15 to 20 mg KOH/g of substance result, and free neutralising agent is still present after the addition of the neutralising agent and salt formation.

10. An aqueous binder combination containing a copolymer A) which exists dispersed and/or dissolved in water according to claims 1 to 7 and a crosslinking resin.

11. An aqueous binder composition according to claim 10, in which the crosslinking resin is selected from among amide- and amine-formaldehyde resins, phenolic resins, aldehyde and ketone resins, blocked polyisocyanates, low-viscosity, hydrophobic or hydrophilic polyisocyanates which comprise free isocyanate groups and are based on aliphatic, cycloaliphatic, araliphatic and/or aromatic isocyanates, or mixtures of different crosslinking resins.

12. An aqueous binder combination according to claim 10 of 50 to 95 wt.% of a copolymer A) which exists dispersed and/or dissolved in water according to claims 1 to 7, and 5 to 50 wt.% of a mixture of 30 to 90 wt.% of a hydrophilically-modified polyisocyanate based on hexamethylene diisocyanate and of 70 to 10 wt.% of a non-hydrophilically-modified polyisocyanate based on hexamethylene diisocyanate and/or isophorone diisocyanate and/or bis-(4-isocyanatocyclohexyl)-methane.

13. An aqueous binder combination according to claim 10 of 50 to 95 wt.% of a copolymer A) which exists dispersed and/or dissolved in water according to claims 1 to 7, and 5 to 50 wt.% of a mixture of 10 to 65 wt.% of a non-hydrophilically modified polyisocyanate of a viscosity of 10 to 1500 mPa·s/23°C which comprises isocyanurate and/or biuret and/or allophanate and/or uretidione structural units and is based on hexamethylene diisocyanate, and of 90 to 35 wt.% of a hydrophilically-modified polyisocyanate based on isophorone diisocyanate and/or bis-(4-isocyanatocyclohexyl)methane.

14. An aqueous binder combination according to claim 10 of 50 to 95 wt.% of a copolymer A) which exists dispersed and/or dissolved in water according to claims 1 to 7, and 5 to 50 wt.% of a mixture of optionally hydrophilically-modified polyisocyanates, which comprise free isocyanate groups, and amino crosslinking resins.

15. Use of the copolymers A) which exist dispersed and/or dissolved in water according to claims 1 to 7 or of the binder combinations according to claims 10 to 14 in paints and coating systems.

16. Use according to claim 15 in lacquers.

**Revendications**

1. Copolymères A) dispersés et/ou dissous dans l'eau, durcissables par combinaison avec des résines réticulantes, consistant en

I) un copolymère hydrophobe I), constitué par

Ia) des esters de l'acide (méth)acrylique ayant des groupements $C_1$ à $C_{18}$ hydrocarbonés dans la partie alcool et/ou des vinylaromatiques et/ou des esters de vinyle, et

Ib) des monomères hydroxy-fonctionnels,

II) un copolymère hydrophile-hydrophobe II) constitué par

IIa) des esters de l'acide (méth)acrylique ayant des groupements $C_1$ à $C_{18}$ hydrocarbonés dans la partie alcool et/ou des vinylaromatiques et/ou des esters de vinyle,
IIb) des monomères hydroxy-fonctionnels et
IIc) des monomères acido-fonctionnels,

et éventuellement
III) un copolymère hydrophobe III) constitué par

IIIa) des esters de l'acide (méth)acrylique hydroxy- et non-fonctionnels ou des vinylaromatiques,

où la proportion par rapport au copolymère A) est pour

Ia) 30 à 80 % en masse
Ib) 5 à 45 % en masse
IIa) 4 à 20 % en masse
IIb) 4 à 15 % en masse
IIc) 0,8 à 3,0 % en masse et
IIIa) 0 à 16 % en masse

et la somme de Ia),
Ib), IIa), IIb), IIc) et éventuellement IIIa) est 100 % en masse, où l'indice d'acide est 10 à 28 mg de KOH/g de substance, la proportion des monomères acido-fonctionnels IIc) par rapport à la quantité de II) contenue dans A) est < 25 % en masse et où la proportion de monomères hydroxy-fonctionnels IIb) dans la quantité II) est supérieure à la proportion de monomère hydroxy-fonctionnel Ib) dans I).

2. Copolymères A) dispersés et/ou dissous dans l'eau selon la revendication 1, **caractérisés en ce que** la proportion des monomères IIa) dans le copolymère II) contenu dans A) est 25 à 65 % en masse, la proportion des monomères IIb) dans le copolymère II) contenu dans A) est 25 à 65 % en masse, la proportion du copolymère I) est 60 à 90 % en masse, la proportion du copolymère II) est 10 à 40 % en masse et la proportion du copolymère III) est 0 à 16 % en masse dans A), et où au moins 70 % des groupes carboxyle sont présents sous forme de sel.

3. Copolymères A) dispersés et/ou dissous dans l'eau selon les revendications 1 et 2, **caractérisés en ce que**, dans le copolymère I), sont contenus

Ia) 40 à 80 % en masse d'esters de l'acide (méth)acrylique ayant des groupements $C_1$ à $C_{18}$ hydrocarbonés aliphatiques dans la partie alcool et/ou de vinylaromatiques,
Ib) 7,5 à 35 % en masse d'esters de l'acide (méth)acrylique hydroxy-fonctionnels,

dans le copolymère II) sont contenus

IIa) 4 à 10 % en masse d'esters de l'acide (méth)acrylique ayant des groupements $C_1$ à $C_{18}$ hydrocarbonés aliphatiques dans la partie alcool et/ou de vinylaromatiques,
IIb) 6 à 12 % en masse d'esters de l'acide (méth)acrylique hydroxy-fonctionnels,
IIc) 1,5 à < 2,5 % en masse de monomères acido-fonctionnels,

et dans le copolymère III) sont contenus

IIIa) 0 à 16 % en masse d'esters de l'acide (méth)acrylique hydroxy- et non-fonctionnels ou de vinylaromatiques,

où les monomères carboxyl-fonctionnels sont utilisés en des quantités telles qu'il en résulte un indice d'acide de > 12 à < 25 mg de KOH/g de substance et où > 90 % des groupes carboxyle sont présents sous forme de sel.

4. Copolymères A) dispersés et/ou dissous dans l'eau selon les revendications 1 à 3, **caractérisés en ce que** la proportion de copolymère I) est > 80 à 90 % en masse, la proportion de copolymère II) est 10 à < 20 % en masse dans A), et la proportion de monomères carboxyl-fonctionnels IIc) dans le copolymère II) est 6 à 18 % en masse, et il apparaît un indice d'acide de 15 à 20 mg de KOH/g de substance, où un agent de neutralisation est ajouté en des quantités telles qu'après conversion de tous les groupes carboxyle dans la forme de sel, il en résulte un pH de 7,9 à 10,0 et de l'agent de neutralisation encore libre est contenu.

5. Copolymères A) dispersés et/ou dissous dans l'eau selon la revendication 1, **caractérisés en ce qu'**un mélange de solvants constitué par 30 à 95 % en masse d'un solvant i) non saponifiable, non miscible à l'eau, hydrophobe, et 5 à 70 % en masse d'un solvant ii) non saponifiable, miscible à l'eau ou soluble dans l'eau, est contenu dans la dispersion en une quantité < 12 % en masse.

6. Copolymères A) dispersés et/ou dissous dans l'eau selon la revendication 1, **caractérisés en ce qu'**un mélange de solvants constitué par 50 à 85 % en masse d'un solvant i) non saponifiable, non miscible à l'eau, hydrophobe et 15 à 50 % en masse d'un solvant ii) non saponifiable, miscible à l'eau ou soluble dans l'eau est contenu dans la dispersion en une quantité de < 9 % en masse.

7. Copolymères A) dispersés et/ou dissous dans l'eau selon la revendication 1, **caractérisés en ce que** la proportion de copolymère III) dans la dispersion de copolymère A) est 3 à 13 % en masse.

8. Procédé de production de copolymères A) dispersés et/ou dissous dans l'eau selon la revendication 1, **caractérisé en ce que**, dans un mélange de solvants constitué par 30 à 95 % en masse d'un solvant hydrophobe, non miscible à l'eau, non saponifiable et 5 à 70 % en masse d'un solvant hydrophile, miscible à l'eau, non saponifiable est conduite une copolymérisation initiée radicalairement de

monomères Ia) et
monomères Ib)

en une quantité de 60 à 90 % en masse d'un copolymère I) hydroxy-fonctionnel hydrophobe, puis, une copolymérisation initiée radicalairement de

monomères IIa),
monomères IIb) et
monomères IIc)

en une quantité de 10 à 40 % en masse d'un copolymère II) hydroxy- et carboxyfonctionnel est conduite hydrophile-hydrophobe est conduite puis, éventuellement, une copolymérisation initiée radicalairement de

monomères IIIa)

en une quantité de < 16 % en masse d'un copolymère III) hydrophobe, hydroxyfonctionnel, est conduite de telle manière qu'après la conversion d'au moins 70 % des groupes carboxyle incorporés en groupes sel et dispersion subséquente ou simultanée, il en résulte un copolymère A) dispersé et/ou dissous dans l'eau, réticulable, qui présente un indice d'acide (incluant les groupes carboxyle déjà présents sous forme de sel) de 10 à 28 mg de KOH/g de substance, où la proportion en pourcentage des monomères hydroxyfonctionnels IIb) dans le copolymère II) est supérieure à la proportion en pourcentage des monomères hydroxyfonctionnels Ib) dans le copolymère I).

9. Procédé selon la revendication 8, **caractérisé en ce que** le solvant est exempt d'eau, consiste à raison de 50 à 85 % en masse en hydrocarbures ou mélanges d'hydrocarbures avec d'autres solvants insaponifiables hydrophobes et à raison de 15 à 50 % en masse en alcools, éthers, cétones et mélanges de ces solvants avec d'autres solvants insaponifiables, miscibles à l'eau ou solubles dans l'eau, et des monomères carboxyl-fonctionnels sont ajoutés en une quantité telle qu'il en résulte des indices d'acide de 15 à 20 mg de KOH/g de substance, et, après addition de l'agent de neutralisation et la formation de sel, de l'agent de neutralisation libre est encore contenu.

10. Combinaison aqueuse de liants contenant un copolymère A) dispersé et/ou dissous dans l'eau selon les revendications 1 à 7 et une résine réticulante.

11. Combinaison aqueuse de liants selon la revendication 10, dans laquelle la résine réticulante est choisie parmi les résines d'amide et d'amine-formaldéhyde, les résines phénoliques, les résines aldéhydiques et cétoniques, les polyisocyanates hydrophobes ou hydrophiles peu visqueux ayant des groupes isocyanate libres à base d'isocyanates aliphatiques, cycloaliphatiques, araliphatiques et/ou aromatiques, ou des mélanges de différentes résines réticulantes.

12. Combinaison aqueuse de liants selon la revendication 10 constituée par 50 à 95 % en masse d'un copolymère A) dispersé et/ou dissous dans l'eau selon les revendications 1 à 7 et 5 à 50 % en masse d'un mélange de 30 à 90 % en masse d'un polyisocyanate modifié de manière hydrophile à base d'hexaméthylènediisocyanate et de 70 à 10 % en masse d'un polyisocyanate non modifié de manière hydrophile à base d'hexaméthylènediisocyanate et/ou d'isophoronediisocyanate et/ou de bis-(4-isocyanatocyclohexyl)-méthane.

13. Combinaison aqueuse de liants selon la revendication 10 constituée par 50 à 95 % en masse d'un copolymère A) dispersé et/ou dissous dans l'eau selon les revendications 1 à 7 et 5 à 50 % en masse d'un mélange de 10 à 65 % en masse d'un polyisocyanate non modifié de manière hydrophile d'une viscosité de 10 à 1500 mPas/23°C avec des unités structurales isocyanurate et/ou biuret et/ou allophanate et/ou urétodione à base d'hexaméthylènediisocyanate et de 90 à 35 % en masse d'un polyisocyanate modifié de manière hydrophile à base d'isophoronediisocyanate et/ou de bis-(4-isocyanatocyclohexyl)-méthane.

14. Combinaison aqueuse de liants selon la revendication 10 constituée par 50 à 95 % en masse d'un copolymère A) dispersé et/ou dissous dans l'eau selon les revendications 1 à 7 et 5 à 50 % en masse d'un mélange de polyisocyanates éventuellement modifiés de manière hydrophile avec des groupes isocyanate libres et de résines réticulantes amino.

15. Utilisation des copolymères A) dispersés et/ou dissous dans l'eau selon les revendications 1 à 7 ou des combinaisons de liants selon les revendications 10 à 14 dans des systèmes de peinture et de revêtement.

16. Utilisation selon la revendication 15 dans des peintures.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 225612 A
- DE 3543361 A
- EP 363723 A
- DE 4009858 A
- DE 4009931 A
- EP 521919 A
- DE 4009932 A
- EP 365775 A
- JP 55082166 A
- US 4413037 A
- US 4151143 A

- EP 557844 A
- EP 358975 A
- DE 4439669 A
- DE 4322242 A
- JP 41245 A
- US 4801653 A
- US 5438099 A
- EP 758007 A
- DE 3022824 A
- EP 540985 A

**In der Beschreibung aufgeführte Nicht-Patentliteratur**

- **H. WAGNER ; H.F. SARX.** Lackkunstharze. Carl Hanser Verlag, 1971